Europäisches Patentamt

European Patent Office

Office européen des brevets

(19)

(11) Veröffentlichungsnummer: **0 195 910**
**B1**

(12) **EUROPÄISCHE PATENTSCHRIFT**

(45) Veröffentlichungstag der Patentschrift: **12.12.90**

(21) Anmeldenummer: **86101740.8**

(22) Anmeldetag: **12.02.86**

(51) Int. Cl.$^5$: **C 08 G 65/30, C 08 G 65/20**

(54) Verfahren zur Einengung der Molekulargewichtsverteilung von Polytetrahydrofuran.

(30) Priorität: **15.02.85 DE 3505152**

(43) Veröffentlichungstag der Anmeldung:
**01.10.86 Patentblatt 86/40**

(45) Bekanntmachung des Hinweises auf die
Patenterteilung:
**12.12.90 Patentblatt 90/50**

(84) Benannte Vertragsstaaten:
**BE DE FR GB IT LU NL**

(56) Entgegenhaltungen:
**EP-A-0 006 107**
**EP-A-0 052 213**

(73) Patentinhaber: **BASF Aktiengesellschaft**
**Carl-Bosch-Strasse 38**
**D-6700 Ludwigshafen (DE)**

(72) Erfinder: **Müller, Herbert, Dr.**
**Carostrasse 53**
**D-6710 Frankenthal (DE)**

Courier Press, Leamington Spa, England.

# EP 0 195 910 B1

**Beschreibung**

Diese Erfindung betrifft ein Verfahren zur Einengung der Molekulargewichtsverteilung von Polytetrahydrofuran durch Erhitzen mit Bleicherden oder Zeolithen.

Die Polymerisation von Tetrahydrofuran (THF) zu Polytetrahydrofuran (PTHF) wurde von Meerwein und Mitarbeitern 1930 entdeckt. Sie wird z.B. in Angewandte Chemis, *72*, 927 (1960) beschrieben. Zum Stand der Technik sei noch auf die Monographie "Polytetrahydrofuran" von P. Dreyfuss, Gordon and Breach Science Publishers, New York, London, Paris 1982 verwiesen. PTHF ist ein Produkt mit steigender wirtschaftlicher Bedeutung. Man verwendet es z.B. für die Herstellung von Polyurethanen oder Polyestern.

PTHF wird durch Polymerisation von THF mit Hilfe kationischer Katalysatoren erhalten. Es setzt sich wie alle polymeren Verbindungen aus Molekülen von unterschiedlichem Polymerisationsgrad zusammen. Die Molekulargewichtsverteilung kann je nach dem gewählten Polymerisationsverfahren mehr oder minder breit sein. Häufig findet man eine sogenannte Gauß'sche Verteilung. Die Molekulargewichtsverteilung des PTHF ist ziemlich breit und weicht häufig von der Gauß'schen Verteilung insofern ab, als der Anteil der Fraktionen mit höherem Molekulargewicht geringer ist als derjenige mit niedrigem Molekulargewicht oder umgekehrt. Man definiert die Einheitlichkeit der Molekulargewichtsverteilung als das Verhältnis von Gewichtsmittelmolekulargewicht ($M_w$) zu Zahlenmittelmolekulargewicht ($M_n$). Man erhält das Zahlenmittelmolekulargewicht, indem das Gewicht einer Probe durch die Anzahl der Moleküle, aus der sie sich zusammen setzt, geteilt wird. Das Gewichtsmittelmolekulargewicht dagegen ist die Summe der Produkte gebildet aus Fraktionsgewichten und Molekulargewichten dividiert durch die Summe der Gewichts der Einzelfraktionen. Die Molekulargewichtsverteilung wird also durch den Quotienten $M_w/M_n$ definiert, den man auch als Heterogenitätsfaktor bezeichnet. Man ermittelt ihn z.B. durch Molekulargewichtsbestimmungen nach der Lichtstreuungsmethode und Osmometrie oder aus den Verteilungskurven, die man mit Hilfe der Gel-Permeations-Chromatographie erhält. Aus diesen gemessenen Verteilungskurven lassen sich die Werte für $M_w$ und $M_n$ bestimmen. Der Heterogenitätsfaktor entspricht ungefähr der Molekulargweichtsverteilung $M_{vis}/M_n$, wie sie z.B. in der DE—PS—2 453 114 beschrieben wird. $M_{vis}$ wird als Kompressionsviskosität bzeichnet. Sie ist ein empirischer Wert, der sich aus der Beziehung 20 g $M_{vis}$ = 0,493 log Viskosität (b. 40°C, i. Poise) + 3,0646 ergibt. Dieser Zusammenhang ergibt sich daraus, daß bei einem Polymeren mit breiter Molekulargewichtsverteilung die Viskosität exponentiell mit dem Molekulargewicht ansteigt. So ist es bekannt, daß die Viskosität breit verteilter Polymerer höher ist als solcher mit enger Molekulargweichtsverteilung derselben Struktur und demselben Zahlenmittelmolekulargewicht. $M_{vis}/M_n$ ist im allgemeinen 10 bis 20% kleiner als $M_w/_n$.

Die Molekulargewichtsverteilung des PTHF hat einen erheblichen Einfluß auf das Eigenschaftsniveau der daraus hergestellten Polyurethanpolymeren oder Polyesterpolymeren. Es gilt ganz allgemein, daß das mechanische Eigenschaftsniveau der Fertigprodukte, insbesondere von Konstruktionswerkstoffen, die aus PTHF hergestellt werden, umso höher liegt, je monodisperser das eingesetzte PTHF hinsichtlich der Molekülgrößen ist. Umgekehrt gilt, daß man Endprodukte mit einem gereingeren Eigenschaftsniveau erhält, wenn man ein PTHF mit breiter Molekulargewichtsverteilung verwendet.

Da man bei der Herstellung von PTHF Polymere mit einer verhältnismäßig breiten Molekulargewichtsverteilung erhält, besteht das Bedürfnis, entweder ein Polymerisationsverfahren zu entwickeln, das Polymere mit einer engen Molekulargewichtsverteilung liefert oder aber eine Möglichkeit zu finden, PTHF durch eine Nachbehandlung in der Molekulargewichtsverteilung einzuengen.

Nach den Angaben der CA—PS—800 659 soll ein PTHF mit engerer Molekulargewichtsverteilung dadurch erhalten werden, daß man die Polymerisation von THF vor Erreichung des Gleichgewichts abbricht. Ein solches Verfahren ist schwer reproduzierbar, da je nach dem Zeitpunkt des Polymerisationsabbruches Produkte mit verschieden hohem mittleren Molekulargewicht entstehen. Die durch die Maßnahme erzielte Einengung der Molekulargewichtsverteilung ist außerdem gering, der erzielte Umsatz des Monomeren liegt niedriger als bei der Gleichgewichtsreaktion, wodurch sich das Verfahren verteuert.

In der DE—PS—2 453 114 wird ein Verfahren zur Herstellung eines PTHF mit engerer Molekulargewichtsverteilung beschrieben, bei dem man ein PTHF-Ausgangsmaterial bei Temperaturen von 120 bis 150°C und in Gegenwart eines vernetzten Ionenaustauschharzes in der Säureform partiell zu Tetrahydrofuran depolymerisiert. Man erhält nach diesem Verfahren zwar befriedigende Ergebnisse. Nachteilig ist aber, daß vernetzte Ionenaustauscherharze teuer sind und nur eine begrenzte Stabilität gegen das Substrat bei erhöhter Temperatur aufweisen. Das Verfahren kann deshalb nur in einem sehr engen Temperaturbereich zwischen 120 bis 135°C ausgeübt werden. Selbst bei diesen geringen Temperaturen läßt es sich jedoch nicht völlig vermeiden, daß die Ionenaustauschharze stark quellen und geringe Mengen davon als Verunreinigungen in das PTHF gelangen. Die Temperaturbegrenzung schränkt die Depolymerisationsgeschwindigkeit ein und bedingt eine Verteuerung des Verfahrens.

Es bestand somit die Aufgabe, ein Verfahren zu finden, das es gestattet, aus einem PTHF mit einer breiten Molekulargewichtsverteilung bei hoher Reaktionsgeschwindigkeit ein PTHF mit enger Molekulargewichtsverteilung herzustellen, wobei eine Verunreinigung des Verfahrensproduktes durch Katalysatorbestandteile vermieden werden sollte. Außerdem sollte die Katalysatoreinsatzzahl niedrig und mit geringen Kosten verbunden sein. Schließlich war die Anforderung zu stellen, daß der Katalysator, falls er durch widrige Umstände in geringer Menge im Polymerisat verbleiben sollte, als physiologisch unbedenklich anzusehen ist.

2

EP 0 195 910 B1

Diese Aufgabe wird gelöst durch ein Verfahren zur Einengung der Molekulargewichtsverteilung von Polytetrahydrofuran, welches durch Polymerisation von Tetrahydrofuran mit Hilfe kationischer Katalysatoren erhalten wurde, durch Erhitzen des Polytetrahydrofurans in Gegenwart eines Katalysators unter gleichzeitigem Abdestillieren von Tetrahydrofuran, das dadurch gekennzeichnet ist, daß man als Katalysator Bleicherden oder Zeolithe verwendet, und das Polytetrahydrofuran so lange auf Temperaturen von 80 bis 280°C erhitzt, bis 10 bis 40 Gew.% des eingesetzten Polytetrahydrofurans depolymerisiert sind.

Man hat Polytetrahydrofuran schon in Gegenwart von Bleicherde auf Temperaturen von 90 bis 180°C erhitzt. Aufgabe dieses in der EP—A—0 052 213 beschriebenen Verfahrens ist es, das Polytetrahydrofuran quantitativ in Tetrahydrofuran zurückzuverwandeln.

Nach dem Verfahren der Erfindung, das der Herstellung von Polytetrahydrofuran mit möglichst enger Molekulargewichtsverteilung dient, verwendet man als Ausgangsstoff ein nach an sich bekannten Verfahren erhältliches PTHF. PTHF wird durch Polymerization von THF mit Hilfe kationischer Katalysatoren erhalten. Es hat im allgemeinen ein Zahlenmittelmolekulargewicht von 650 bis 3000, eine Molekulargewichtsverteilung ($M_w/_n$) von 1,5 bis 4 und eine Viskosität, die zwischen 1 und 70 Poise (bei 40°C) liegt. Man nimmt die erfindungsgemäße Einengung der Molekulargewichtsverteilung bei diesen Ausgangsstoffen im allgemeinen so vor, daß man für den oben angegebenen Molekulargewichtsbereich ein PTHF mit einer Molekulargewichtsverteilung ($M_w/_n$) zwischen den Werten 1,2 bis 2,5 erhält. Der kleinere Wert ist den Produkten mit niedrigem Molekulargewicht, der größere Wert den Produkten mit hohem Molekulargewicht bis zu 3000 zuzuordnen. Diese angestrebte Einengung der Molekulargewichtsverteilung ist erreicht, wenn 10 bis 40 Gew.%, vorzugsweise 15 bis 25 Gew.% des eingesetzten PTHF, unter den Bedingungen des erfindungsgemäßen Verfahrens depolymerisiert sind. Obwohl theoretisch nicht zu begründen, konnte nachgewiesen werden, daß die Moleküle mit kleinerer Molekülmasse etwas schneller abgebaut werden als die Moleküle mit hoher Molekularmasse. Bei Depolymerisationstemperaturen unter 150°C ist das Phänomen stärker ausgeprägt als bei höheren Temperaturen. Sobald ca. 20 bis 40% des ursprünglichen PTHF depolymerisiert sind, nähert sich die Verteilungskurve der Molekulargewichte der Form einer idealen Gauß'schen Verteilungskurve.

Als Katalysatoren werden für das erfindungsgemäß Verfahren Bleicherden oder Zeolithe verwendet.

Bleicherden werden z.B. in Ullmann, Enzyklopädie der technischen Chemie, 3. Auflage, Bd. IV, Seiten 541—545 beschrieben. Geeignet sind z.B. natürliche oder synthetische Bleicherden, insbesondere Aluminium-Hydrosilikate oder Aluminium-Magnesium-Hydrosilikate vom Typ des Montmorrillonits, die durch Säuren aktiviert sein können und z.B. unter der Bezeichnung ®Tonsil im Handel erhältlich sind. Synthetische Bleicherden werden z.B. in der GB—PS—854 958 beschrieben. Handelsübliche wasserhaltige Bleicherden werden zweckmäßigerweise vor ihrem Einsatz z.B. bei Temperaturen von 100 bis 200°C, vorzugsweise von 110 bis 150°C, in 1 bis 8 Stunden, vorzugsweise 2 bis 4 Stunden bei Normaldruck oder vorzugsweise unter vermindertem Druck entwässert. Die so erhaltenen Katalysatoren enthalten dann weniger als 1 Gew.% Wasser. Es können aber auch handelsübliche wasserhaltige Bleicherden direkt eingesetzt werden. Diese Katalysatoren wiesen in der Anfangsphase eine etwas geringere Aktivität auf, was aber durch eine geringe Temperaturerhöhung bei der Molekulargewichtsverengungs-Operation leicht behoben werden kann.

Anstelle von Bleicherden kann man auch Zeolithe verwenden. Geeignete Zeolithe sind z.B. natürlich vorkommende Kalktonerde- und Alkalitonerdesilikate oder synthetisch hergestellte Zeolithe, die in ihrer Zusammensetzung der allgemeinen Formel $M_{x/n}[(AlO_2)_x(SiO_2)_y]_zH_2O$ entsprechen. In der Formel steht M z.B. für Na, K, Ca, Ba; n bedeutet die Ladung des Metallkation, $M_n^{\oplus}$ und x, y, z stehen für einfache ganze Zahlen. Al kann durch B oder Fe ersetzt sein.

Die Verwendung von Bleicherden ist gegenüber der Verwendung der Zeolithe bevorzugt.

Man verfährt z.B. so, daß man den Katalysator in suspendierter Form anwendet. Vorteilhafte Ergebnisse werden erzielt, wenn man den Katalysator, bezogen auf den gesamten Ansatz, in einer Menge von z.B. 0,1 bis 10 Gew.%, vorzugsweise 0,2 bis 5 Gew.% einsetzt. Es können auch größere und kleinere Mengen angewendet werden. Die im Umsetzungsgemisch suspendierten Katalysatoren können durch gebräuchliche physikalische Trennmethoden, wie Filtrieren oder Zentrifugieren, aus dem Polymeren abgetrennt und erneut für eine beliebige Anzahl weiterer Ansätze verwendet werden. Zur Vermeidung von Verfärbungen und Peroxidbildung am PTHF empfiehlt es sich, die Abtrennung und Rückführung des Katalysators unter Ausschluß von Sauerstoff, z.B. unter trockenen Schutzgasen, wie Stickstoff, Argon oder Kohlendioxid vorzunehmen.

Nach einer anderen Ausführungsform wird der Katalysator als Formkorper verpreßt und in einem festen Katalysatorbett angeordnet. Zur Herstellung der Katalysatorformkörper werden die Bleicherden oder Zeolithe mit Bindemitteln, insbesondere Wasser, verknetet und zu Formkörpern verpreßt. Anschließend werden die wasserhaltigen Formkörper oberhalb 100°C, vorzugsweise bei Temperaturen von 200 bis 700°C, bei Normaldruck oder unter vermindertem Druck gegebenenfalls in Gegenwart von unter den Reaktionsbedingungen inerten Gasen, z.B. Edelgase, wie Helium oder Argon oder insbesondere Stickstoff auf den oben genannten Wassergehalt entwässert. Die verpreßten Katalysatoren können beispielsweise die Form von Kugeln, Ringen, Zylinderen oder Tabletten aufweisen. Bei Verwendung von kugelförmigen Katalysatoren weisen die Kugeln im allgemeinen einen Durchmesser von 2 bis 15 mm, vorzugsweise von 3 bis 6 mm auf. Als zylinderförmige Formkörper werden im allgemeinen Zylinder mit einer Länge von 2 bis 15 mm und einem Durchmesser von 2 bis 6 mm verwendet. Nicht kugel- oder

3

zylinderförmige Formkörper weisen im allgemeinen ein Volumen auf, das dem der zylinderförmgien Formkörper entspricht.

Die geformten Katalysatoren werden in einem Reaktionsgefäß, beispielsweise einem Röhren- oder Schachtofen aufgeschüttet. Die gewählte Dimension der Katalysatorschüttung wird vorzugsweise durch die gewünschten Strömungsverhältnisse sowie der eventuell notwendigen Möglichkeit der Wärmezuführung bestimmt. Die Reaktionsgefäße, die im allgemeinen säulenförmig sind, können einen Querschnitt in beliebiger Form, beispielsweise in Form eies Quadrates oder einer Ellipse aufweisen. Vorzugsweise verwendet man jedoch langgestreckte zylinderförmige Reaktionsgefäße. Das Verhältnis von Innendurchmesser zu Länge des Reaktionsgefäßes beträgt im allgeinenen 1:2 bis 1:100, vorzugsweise 1:10 bis 1:40. Die Reaktionsgefäße können senkrecht oder waagerecht ausgerichtet sein und auch Zwischenlagen einnehmen. Vorzugsweise verwendet man jedoch einen senkrecht stehenden Röhrenofen, bei dem der Rohrdurchmesser z.B. 10 bis 100 mm beträgt. Legt man weniger Wert auf eine genaue Temperaturführung, so können als Reaktionsgefäß auch einfache Schachtöfen mit oder ohne Produktrückführung eingesetzt werden.

Die Molekulargewichtseinengung wird so durchgeführt, daß man das PTHF mit breiter Molekulargewichtsverteilung in dem gewählten Reaktionsgefäß mit dem Katalysator bei Temperaturen zwischen 80 und 280°C, vorzugsweise zwischen 100 und 180°C in Kontakt bringt. Durch Temperaturerhöhung wird die Umsetzung sehr stark beschleunigt, man wählt deshalb die Reaktionstemperatur in den meisten Fällen so aus, daß die Reaktionsgeschwindigkeit bei der gewünschten Reaktionstemperatur den gestellten Anforderungen entspricht. In vielen Fällen wird man bei Temperaturen unter 150°C arbeiten. Bei diesen relativ niedrigen Temperaturen ist die Reaktionsgeschwindigkeit keit noch hoch genug und die Einengung der Molekulargewichtsverteilung wirkungsvoller als bei höheren Temperaturen. Jedenfalls läßt sich nahezu jede Reaktionsgeschwindigkeit durch Wahl der Reaktionstemperatur und der Katalysatorkonzentration erreichen. Die Reaktion kann kontinuierlich und diskontinuierlich durchgeführt werden. Bei der kontinuierlichen Durchführung durchströmt die eingesetzte Polymerisatmischung den mit dem fest angeordneten Katalysatorbett beschickten Reaktor. Man erhält dann ein Fertigpolymerisat, das frei von Katalysatorbestandteilen ist, so daß eine physikalische Trennung von Polymerisat und Katalysator nicht mehr erforderlich ist. Sofern das Verfahrensprodukt nach der erfindungsgemäßen Behandlung noch Tetrahydrofuran gelöst enthält, kann man durch Eindampfen des erhaltenen Polymerisates solche THF-Anteile leicht entfernen. Man erhält so ein für alle Anwendungsbereiche geeignetes PTHF.

Das vorteilhafte Ergebnis des erfindungsgemäßen Verfahrens konnte nicht erwartet werden, da beim Erhitzen von Copolymerisaten aus THF und einem Alkylenoxid mit Bleicherden auf Temperaturen um 100°C der Gehalt der Copoloymerisate an oligomeren cyclischen Ethern verringert wird (s. EP—PS—6 107). Offensichtlich weden hier die cyclischen Ether in die darin enthaltenen Bestandteile zerlegt, während die hydroxylgruppenhaltigen Polymeren bei der erfindungsgemäßen Behandlung von PTHF unbeeinflußt bleiben. Es ist ferner bekannt, daß Bleicherden in der Lage sind, THF selbst bei Temperaturen um 100°C zu polymerisieren (s. DE—PS—1 226 560 und GB—PS—854 958).

Im allgemeinen verbleibt bei dem in der EP—PS—6 107 beschriebenen Verfahren im Verfahrensprodukt ein Restgehalt an cyclischen Ethern von 1,5 bis 3%. Versucht man, diesen durch Temperaturerhöhung auf z.B. üer 130°C zu entfernen, so werden je nach Temperatur und Verweilzeit starke Verfärbungen und Schädigungen des Polymerisates beobachtet (EP—PS—6 107, Seite 3, Zeilen 60 bis 63). Überraschenderweise treten diese schädlichen Auswirkungen der Temperaturerhöhung bis zu 160°C bei erfindungsgemäßen Verfahren nicht auf, wenn bei Normaldruck gearbeitet wird. Übt man das erfindungsgemäße Verfahren unter einem Druck von 1 bis 100 bar, vorzugsweise 10 bis 70 bar aus, so läßt es sich ohne Qualitätsbeeinträchtigung für das Polymerisat bei Temperaturen bis zu 200°C und höher durchführen. Die Reaktionsgeschwindigkeit wird dadurch um ein Vielfaches erhöht, was sich insbesondere für die kontinuierliche Verfahrensausübung sehr vorteilhaft auswirkt.

## Beispiel 1

In einem Rührreaktor mit dem Volumen von 2000 Teilen werden 1500 Gew.-Teile PTHF mit einem Molekulargewicht von 1021 und einem Heterogenitätsfaktor $M_w/n$ von 2,2 und 7 Gewichtsteile der unter der Bezeichnung Tonsil® Optimum FF im Handel erhältlichen Bleicherde vorgelegt. Man erhitzt den Reaktorinhalt mit Hilfe einer Innenschlange auf 110°C. Bereits bei dieser Temperatur beginnt die Abspaltung von THF, welches über einen an den Rührreaktor angeschlossenen absteigenden Kühler kondensiert wird. Das abdestillierte THF ist chemisch rein und enthält am Anfang der Umsetzung ca. 7 Gew.% Wasser. Gegen Ende der Umsetzung, das ist der Zeitpunkt, an dem ca. 30% des eingesetzten Polytetrahydrofurans depolymerisiert sind, enthält das abdestillierte THF nur noch zwischen 2 und 3,5% Wasser. Der Verlauf der Reaktion und das erzielte Ergebnis sind in der nachfolgenden Tabelle zusammengefaßt. Der Heterogenitätsfaktor $M_w/n$ wurde aus den Werten für das Gewichtsmittelmolekulargewicht ($M_w$) und das Zahlenmittelmolekulargewicht ($M_n$) errechnet, die durch Gel-Permeations-Chromatographie bestimmt wurden. Die GPC-Analyse wurde bei 23°C mit THF als Lösungsmittel bestimmt. Dabei wurde eine 3er-Säulen-Kombination mit einer Bodenzahl vo ca. 30 000 und als Detektor ein Differenzialrefraktometer (im Handel unter der Bezeichnung Knauer-Dual-Detektor erhältlich) und ein Linien-UV-Fotometer (254 nm) in einer Küvette verwendet. Die Eichung erfolgte mit eng verteilten Polystyrolfraktionen.

4

| Reaktionszeit [h] | Reaktionstemperatur [°C] | PTHF depolymerisiert [Gew.%] | Molekulargewicht | Heterogenitätsfaktor $M_w/M_n$ | Wassergehalt im THF [Gew.%] | Viskosität mPa . s 40°C |
|---|---|---|---|---|---|---|
| 0 | - | 0 | 1 021 | 2,2 | - | 45 |
| 1,2 | 110 | 4,8 | 1 390 | 2,1 | 5,6 | - |
| 2,2 | 110 | 9,8 | 1 520 | 2,0 | 4,8 | - |
| 3,2 | 110 | 14,6 | 1 580 | 1,9 | 3,9 | - |
| 4,2 | 110 | 19,5 | 1 700 | 1,85 | 3,2 | - |
| 5,2 | 110 | 25,0 | 1 870 | 1,8 | 2,7 | - |
| 6,2 | 110 | 29,3 | 2 040 | 1,7 | 2,2 | 80 |

Beispiel 2

Verfährt man entsprechend Beispiel 1, wobei man jedoch 3 Stunden unter einem Druck von 20 bar auf 150°C erhitzt, anstelle der pulverförmigen Bleicherde in 3 mm Stränge gepreßte Bleicherde der gleichen Art verwendet und wobei man die geformte Bleicherde als Festbett anordnet, so werden 23% PTHF depolymerisiert und man erhält ein Endpolymerisat mit einem Molekulargewicht von 1300. Der Heterogenitätsfaktor $M_w/_n$ liegt bei 1,9.

Beispiel 3

Es wurde wie in Beispiel 1 beschrieben verfahren, wobei man jedoch anstelle der Bleicherde den unter der Bezeichnung KC-Perlkator® D 10-A im Handel erhältlichen synthetischen Zeolithen (gepulvert) verwendete und die Umsetzung bei 125°C durchführte. Dabei wurde ein sehr ähnliches Ergebnis erhalten.

**Patentansprüche**

1. Verfahren zur Einengung der Molekulargewichtsverteilung von Polytetrahydrofuran, welches durch Polymerisation von Tetrahydrofuran mit Hilfe kationischer Katalysatoren erhalten wurde, durch Erhitzen des Polytetrahydrofurans in Gegenwart eines Katalysators und gleichzeitigem Abdestillieren von Tetrahydrofuran, dadurch gekennzeichnet, daß man als Katalysatoren Bleicherden oder Zeolithe verwendet, und das Polytetrahydrofuran so lange auf Temperaturen von 80 bis 280°C erhitzt, bis 10 bis 40 Gew.% des eingesetzten Polytetrahydrofurans depolymerisiert sind.

2. Verfahren nach Anspruch 1, dadurch gekennzeichnet, daß man das Polytetrahydrofuran auf Temperaturen von 100 bis 180°C erhitzt.

3. Verfahren nach Anspruch 1, dadurch gekennzeichnet, daß man die Einengung kontinuierlich an einem fest angeordneten Katalysatorbett vornimmt.

4. Verfahren nach Anspruch 1, dadurch gekennzeichnet, daß man die Einengung bei Drücken von 1 bis 100 bar vornimmt.

**Revendications**

1. Procédé de concentration de la répartition des poids moléculaires du polytétrahydrofuranne qui a été obtenu par polymérisation de tétrahydrofuranne à l'aide de catalyseurs cationiques, par chauffage du polytétrahydrofuranne en présence d'un catalyseur avec élimination simultanée du tétrahydrofuranne par distillation, caractérisé en ce qu'on utilise comme catalyseur des terres blanches ou des zéolithes et on chauffe le polytétrahydrofuranne à des températures de 80 à 280°C jusqu'à ce que 10 à 40% en poids du polytétrahydrofuranne en réaction soient dépolymérisés.

2. Procédé selon la revendication 1, caractérisé en ce qu'on chauffe le polytétrahydrofuranne à des températures de 100 à 180°C.

3. Procédé selon la revendication 1, caractérisé en ce qu'on effectue la concentration en continu sur un lit de catalyseur orienté solide.

4. Procédé selon la revendication 1, caractérisé en ce qu'on effectue la concentration à des pressions de 1 à 100 bar.

**Claims**

1. A process for narrowing the molecular weight distribution of polytetrahydrofuran obtained by polymerization of tetrahydrofuran using a cationic catalyst by heating the polytetrahydrofuran in the presence of a catalyst while simultaneously distilling off tetrahydrofuran, wherein the catalyst used is a bleaching earth or a zeolite, and the polytetrahydrofuran is heated at from 80 to 280°C until from 10 to 40% by weight of the polytetrahydrofuran used has been depolymerized.

2. A process as claimed in claim 1, wherein the polytetrahydrofuran is heated at from 100 to 180°C.

3. A process as claimed in claim 1, wherein the narrowing procedure is carried out continuously over a fixed catalyst bed.

4. A process as claimed in claim 1, wherein the narrowing procedure is carried out at from 1 to 100 bar.